(19) Europäisches Patentamt

European Patent Office

Office européen des brevets

(11) **EP 1 182 168 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.⁷: **C01B 33/14**

(21) Anmeldenummer: **01710041.3**

(22) Anmeldetag: **20.08.2001**

(54) **Pyrogen hergestelltes Siliciumdioxid**

Pyrogenically produced silicon dioxide

Dioxyde de silicium pyrogéniquement préparé

(84) Benannte Vertragsstaaten:
**AT BE CH CY DE DK ES FI FR GB GR IE IT LI LU MC NL PT SE TR**

(30) Priorität: **21.08.2000 EP 00117922**
**03.07.2001 EP 01115613**

(43) Veröffentlichungstag der Anmeldung:
**27.02.2002 Patentblatt 2002/09**

(73) Patentinhaber: **Degussa AG**
**40474 Düsseldorf (DE)**

(72) Erfinder:
• **Oswald, Dr. Monika**
**63454 Hanau (DE)**
• **Schneider, Dr. Gerrit**
**63456 Hanau (DE)**
• **Deller, Dr. Klaus**
**63512 Hainburg (DE)**

(56) Entgegenhaltungen:
**EP-A- 0 855 368          US-A- 5 116 535**

## Beschreibung

Die Erfindung betrifft ein pyrogen hergestelltes Siliciumdioxid.

Pyrogen hergestelltes Siliciumdioxid oder pyrogen hergestellte Kieselsäure ist bekannt aus Ullmann's Enzyklopädie der Technischen Chemie 4. Auflage, Band 21, Seite 464.

Es ist bekannt, pyrogen hergestelltes Siliciumdioxid bei der Herstellung von Glaskörpern einzusetzen (US 5,207,814, EP 0 586 013 B1, EP 0 705 797 A2, EP 0 131 057 B1, US 4,681,615, US 4,801,318).

Das bekannte pyrogen hergestellte Siliciumdioxid hat den Nachteil, daß es in der bei der Glasherstellung verwendeten Dispersion ein nicht zufriedenstellendes Viskositätsverhalten aufweist.

Es besteht somit die Aufgabe der Erfindung ein pyrogen hergestelltes Siliciumdioxid zur Verfügung zu stellen, das diesen Nachteil nicht aufweist.

Gegenstand der Erfindung ist ein pyrogen hergestelltes Siliciumdioxid mit den folgenden physikalisch-chemischen Eigenschaften:

1. Durchschnittliche Partikelgröße ($D_{50}$-Wert) oberhalb $D_{50} \geq 150$ nm (dynamische Lichtstreuung, 30 Gew.-%)

2. Viskosität (5 RPM, 30 Gew.-%) $\eta \leq 100$ m-Pas

3. Thixotropie der

$$T_i \left( \frac{\eta(5RPM)}{\eta(50RPM)} \right) \leq 2$$

4. BET-Oberfläche 30 bis 60 $m^2/g$

5. Stampfdichte SD = 100 bis 160 g/l

6. Ursprungs-pH-Wert $\leq 4,5$

### **Meßmethoden:**

Partikelgröße

Meßmethode: Bei der Photonenkorrelationsspektroskopie (PCS) handelt es sich um ein dynamisches Streulichtverfahren, mit dem Teilchen im Bereich von ca. 5 nm bis 5 um detektiert werden können. Als Meßergebnis kann man neben dem mittleren Teilchendurchmesser auch eine Teilchengrößenverteilung berechnen lassen.

Lichtquelle: 650 nm Diodenlaser
Geometrie: 180° Homodynstreuung
Probenmenge: 2 ml
Berechnung der Verteilung nach der Mie-Theorie

Vorgehen: 2 ml Dispersion (30 M.-%) werden in eine Meßküvette gegeben, der Temperaturfühler wird eingesetzt und die Messung gestartet. Die Messung erfolgt bei Raumtemperatur.

Viskosität

Meßmethode: Es steht ein programmierbares Rheometer zur Untersuchung von komplexem Fließverhalten, ausgerüstet mit Standardrotationsspindeln, zur Verfügung.

Schergeschwindigkeiten: 5 bis 100 rpm
Meßtemperatur: Raumtemperatur (23 °C)
Dispersionskonzentration: 30 M.-%

Vorgehen: 500 ml Dispersion werden in ein 600 ml-Becherglas gegeben und bei Raumtemperatur (statistische Erfassung der Temperatur über Meßfühler) unter verschiedenen Schergeschwindigkeiten untersucht.

BET: in Anlehnung an DIN 66131

Stampfdichte: in Anlehnung an DIN ISO 787/XI K 5101/18 (nicht gesiebt)

pH-Wert: in Anlehnung an DIN ISO 787/IX, ASTM D 1280, JIS K 5101/24.

Das erfindungsgemäße pyrogen hergestellte Siliciumdioxid kann hergestellt werden, indem man eine flüchtige Siliciumverbindung wie zum Beispiel Siliciumtetrachlorid oder Trichlormethylsilan mit einem Sauerstoff enthaltenden Gas und Wasserstoff vermischt und dieses Gasgemisch in einer Flamme verbrennt.

Anschließend kann die erhaltene Kieselsäure einen Entsäuerungsschritt unterzogen werden, wobei bei einer Temperatur von $600 \pm 50\,°C$ die Kieselsäure mit einem Gemisch aus Wasserdampf und Luft behandelt wird. Bei der Entsäuerung kann ein Entsäuerungsindex von 0,95 Gew.-% bis weniger als 3,0 Gew.-% erzielt werden

Die erfindungsgemäße Kieselsäure kann einen Entsäuerungsindex DI von weniger als 3 Gew.-% vorzugsweise von 0,95 bis 2,9 Gew.-% aufweisen.

Das erfindungsgemäße pyrogen hergestellte Siliciumdioxid kann vorteilhaft zur Herstellung von Dispersionen in wässrigen und/oder nicht-wässrigen Lösungsmitteln eingesetzt werden.

Ein weiterer Gegenstand der Erfindung ist eine Dispersion in wässrigen und/oder nicht-wässrigen Lösungsmitteln, die das erfindungsgemäße pyrogen hergestellte Siliciumdioxid enthält.

Das erfindungsgemäße pyrogen hergestellte Siliciumdioxid sowie die erfindungsgemäße Dispersion können zur Herstellung von Glaskörpern beispielsweise nach dem Sol-Gel-Verfahren verwendet werden.

Die erfindungsgemäße Kieselsäure kann in der Papierindustrie, als keramischer Grundstoff, in der Elektronikindustrie, als Poliermittel (CMP-Anwendungen), in der Kosmetikindustrie, in der Silikon- und Kautschukindustrie, zur Einstellung der Rheologie von flüssigen Systemen, als Ausgangsstoff zur Herstellung von Glas oder Glasbeschichtungen oder Schmeltiegeln, in der Dentalindustrie, in der pharmazeutischen Industrie, bei PET-Film-Anwendungen, als Ausgangsstoff zur Herstellung von Filterkeramiken oder Filtern, als Rostschutzmittel, in Tinten und Batterieseparatoren, als Katalysator oder Katalysatorträgermaterial, in Lacken und Farben, in Tonern oder in Tonerpulvern, als Sonnenschutz, als Trennmittel oder Trennhilfsmittel, zur Hitzeschutzstabilisierung, in Fluoreszenz-Röhren, als Mittel zum Film-Coaten von Polyethylen (PET) und Polyvinylacetat, als Füllstoff, als Füllstoff für Polymere, als Adsorbens, in der Lebensmittelindustrie, verwendet werden.

Das erfindungsgemäße pyrogen hergestellte Siliziumdioxid zeigt in der Form der wäßrigen Dispersion eine vorteilhaft niedrige Viskosität auf.

Beispiele:

Die erfindungsgemäße Kieselsäure wird folgendermaßen hergestellt.

**Beispiel A: (Vergleichsbeispiel)**

600 kg/h SiCl$_4$ werden bei ca. 90 °C verdampft und in das Zentralrohr eines Brenners bekannter Bauart überführt. In dieses Rohr werden zusätzlich 172 Nm$^3$ /h Wasserstoff sowie 245 Nm$^3$ /h mit einem (erhöhten) Sauerstoffanteil von 35 Vol.% gegeben. Dieses Gasgemisch wird entzündet und brennt in den Brennerraum eines wassergekühlten Flammrohres. In eine die Zentraldüse umgebende Manteldüse werden zur Vermeidung von Anbackungen zusätzlich 15 Nm$^3$/h Wasserstoff gegeben. In das Flammrohr werden zusätzlich 290 Nm$^3$/h Luft normaler Zusammensetzung eingespeist.

Nach der Abkühlung der Reaktionsgase wird die pyrogene Kieselsäure von den salzsäurehaltigen Gasen in einer Filtereinheit abgerennt. In einer Entsäuerungseinheit wird bei einer Verweilzeit von 20 Sekunden die pyrogene Kieselsäure bei einer Temperatur von 600 °C mit Wasserdamp und Luft behandelt, wobei der Entsäuerungsindex DI (Deacidification Index) 6,2 Gew.-% beträgt.

Der Entsäuerungsindex DI ist definiert als das Verhältnis (in Gewichtseinheiten) von eingesetztem Wasserdampf zu zu entsäuernder pyrogener Kieselsäure

$$DI = (m\,H_2O\ /\ m\,SiO_2)\ *\ 100\ \%$$

(m = Masse)

Wird aus dieser Kieselsäure eine Dispersion gemäß dem folgenden Vergleichsbeispiel 1 hergestellt, resultiert die dort angegebene Viskosität von 240 mPas einer 30-prozentigen wäßrigen Dispersion.

**Beispiel B:**

Herstellung der erfindungsgemäßen pyrogenen Kieselsäure mit niedriger Viskosität in der Dispersion

600 kg/h $SiCl_4$ werden bei ca. 90 °C verdampft und in das Zentralrohr eines Brenners bekannter Bauart überführt. In dieses Rohr werden zusätzlich 172 $Nm^3$/h Wasserstoff sowie 245 $Nm^3$/h Luft mit einem (erhöhten) Sauerstoffanteil von 35 Vol.% gegeben. Dieses Gasgemisch wird entzündet und brennt in den Brennerraum eines wassergekühlten Flammrohres. In eine die Zentraldüse umgebende Manteldüse werden zur Vermeidung von Anbakkungen zusätzlich 15 $Nm^3$/h Wasserstoff gegeben. In das Flammrohr werden zusätzlich 290 $Nm^3$/h Luft normaler Zusammensetzung eingespeist.

Nach der Abkühlung der Reaktionsgase wird die pyrogene Kieselsäure von den salzsäurehaltigen Gasen in einer Filtereinheit abgetrennt. In einer Entsäuerungseinheit wird bei einer Verweilzeit von 20 Sekunden die pyrogene Kieselsäure bei einer Temperatur von 600 °C mit Wasserdampf und Luft behandelt, wobei der Entsäuerungsindex DI (Deacidification Index) 0,95 Gew.-% beträgt.

Wird aus dieser Kieselsäure eine Dispersion gemäß dem Vergleichsbeispiel 1 hergestellt, resultiert die dort angegebene Viskosität von 40 mPas einer 30-prozentigen Dispersion.

| Nr. | $SiCl_4$ kg/h | Primärluft anger. $Nm^3$/h | $H_2$ Kern $Nm^3$/h | $H_2$ Mantel $Nm^3$/h | BET $m^2$/g | Entsäuerungsindex DI [%] | Viskosität 30 % [mPas] |
|-----|------|------|------|------|------|------|------|
| A | 600 | 245 | 172 | 15 | 50 | 6,2 | 240 |
| B | 600 | 245 | 172 | 15 | 50 | 0,95 | 40 |

Ausführungsbeispiele:

Beispiel 1

Herstellung einer Dispersion:

245 g destilliertes Wasser werden in einem Becherglas vorgelegt und mit einer organischen Base, vorzugsweise TMAH (Tetramethylammoniumhydroxid), auf den pH-Wert von 11 eingestellt.
Anschließend werden mittels eines Dissolvers mit Dissolverscheibe 105 g pyrogenes Oxid in das Wasser eingetragen. Die Drehzahl des Dissolvers beträgt dabei ca. 1000 U/min. Nachdem das Oxid vollständig in die Dispersion eingearbeitet ist, wird die Dispersion mittels Dissolver noch zwischen 10 und 30 min. vordispergiert.
Anschließend wird die Dispersion mit einem Ultra-Turrax Rotor-Stator-Dispergieraggregat bei 10 000 U/min zwischen 10 und 30 min. dispergiert.

Die Viskosität der Dispersion beträgt bei einer Rotationsgeschwindigkeit von 5 rpm 40 mPas.

**Vergleichsbeispiel 1**

Herstellung einer Dispersion:

245 g destilliertes Wasser werden in einem Becherglas vorgelegt und mit einer organischen Base, vorzugsweise TMAH (Tetramethylammoniumhydroxid), auf den pH-Wert von 11 eingestellt.
Anschließend werden mittels eines Dissolvers mit Dissolverscheibe 105 g herkömmliches pyrogenes Oxid in das WAsser eingetragen. Die Drehzahl des Dissolvers beträgt dabei ca. 1000 U/min. Nachdem das Oxid vollständig in die Dispersion eingearbeitet ist, wird die Dispersion mittels Dissolver noch zwischen 10 und 30 min. vordispergiert. Anschließend wird die Dispersion mit einem Ultra-Turrax Rotor-Stator-Dispergieraggregat bei 10 000 U/min zwischen 10 und 30 min. dispergiert. Die Viskosität der Dispersion beträgt bei einer Rotationsgeschwindigkeit von 5 rpm 240 mPas.

**Beispiel 2**

17,2 g des pyrogenen Oxids werden mit 27 ml dest. Wasser und 2,57 ml TMAH (Tetramethylammoniumhydroxid) zu einer homogenen Dispersion, wie in Beispiel 1 beschrieben, angerührt. Nach Fertigstellung der Dispersion werden 10 ml Essigsäureethylester zugegeben und die Dispersion sofort in eine Form gegossen.
Nach 12 Minuten ist die Dispersion geliert und der entstandene Gelkörper wird nach einer Stunde der Form entnommen und bei Raumtemperatur 6 Tage getrocknet.

Durch die Trocknung entsteht ein mikroporöser Grünkörper. Dieser wird mittels Zonensinterung unter Vakuum bei 1400 °C für vier Stunden gesintert. Es entsteht ein Sinterglaskörper ohne sichtbare Blasen oder Poren.

**Patentansprüche**

1. Pyrogen hergestelltes Siliciumdioxid mit den folgenden physikalisch-chemischen Eigenschaften:

   a) Durchschnittliche Partikelgröße ($D_{50}$-Wert) oberhalb $D_{50} \geq 150$ nm (dynamische Lichtstreuung, 30 Gew.-%)

   b) Viskosität ( 5 RPM, 30 Gew.-%)

$$\eta \leq 100 \text{ m-Pas}$$

   c) Thixotropie der

$$T_i \left( \frac{\eta(5 RPM)}{\eta(50 RPM)} \right) \leq 2$$

   d) BET-Oberfläche 30 bis 60 $m^2$/g

   e) Stampfdichte SD = 100 bis 160 g/l

   f) Urprungs-pH-Wert $\leq 4{,}5$

2. Dispersion, enthaltend ein pyrogen hergestelltes Siliciumdioxid gemäß Anspruch 1.

3. Verwendung des pyrogen hergestellten Siliciumdioxides gemäß Anspruch 1 zur Herstellung von Glas-Körpern.

4. Verwendung der Dispersionen gemäß Anspruch 2 zur Herstellung von Glas-Körpern.

**Claims**

1. Pyrogenically prepared silicon dioxide having the following physico-chemical properties:

   a) average particle size ($D_{50}$ value) above $D_{50} \geq 150$ nm (dynamic light scattering, 30 wt.%)

   b) viscosity (5 rpm, 30 wt.%) $\eta \leq 100$ m-Pas

   c) thixotropy of the

$$T_i \left( \frac{\eta(5 \text{ rpm})}{\eta(50 \text{ rpm})} \right) \leq 2$$

   d) BET surface area from 30 to 60 $m^2$/g

   e) tamped density SD = from 100 to 160 g/l

f) initial pH value $\leq$ 4.5.

**2.** Dispersion containing a pyrogenically prepared silicon dioxide according to claim 1.

**3.** Use of the pyrogenically prepared silicon dioxide according to claim 1 in the production of glass bodies.

**4.** Use of the dispersions according to claim 2 in the production of glass bodies.

**Revendications**

**1.** Dioxyde de silicium produit par pyrogénation, possédant les propriétés physico-chimiques suivantes :

a) Taille moyenne des particules ($D_{50}$) délimitée par $D_{50} \geq$ 150 nm (diffusion dynamique de la lumière, 30 % en poids)
b) Viscosité (5 RPM, 30 % en poids) h $\leq$ 100 mPas
c) Thixotropie des

$$Ti\left(\frac{\eta(5RPM)}{\eta(50RPM)}\right) \leq 2.$$

d) Surface BET de 30 à 60 m$^2$/g
e) Densité de tassement SD = de 100 à 160 g/litre
f) pH originel $\leq$ 4,5.

**2.** Dispersion, contenant un dioxyde de silicium produit par pyrogénation selon la revendication 1.

**3.** Utilisation du dioxyde de silicium produit par pyrogénation selon la revendication 1, pour la fabrication de corps en verre.

**4.** Utilisation de dispersions selon la revendication 2 pour la fabrication de corps en verre.